# EUROPÄISCHE PATENTSCHRIFT

(11) **EP 0 490 821 B1**
(45) Veröffentlichungstag und Bekanntmachung des Hinweises auf die Patenterteilung: **08.06.1994**
(21) Anmeldenummer: 91810947.1
(22) Anmeldetag: 06.12.1991
(51) Int. Cl.: B65G 25/02, B21D 43/05

(54) **Transferanordnung an einer Presse**
Transfer arrangement for presses
Mécanisme de transfert pour presses

(30) Priorität: 11.12.1990 CH 3917/90
(43) Veröffentlichungstag der Anmeldung: 17.06.1992
(73) Patentinhaber: STYNER & BIENZ AG, CH-3172 Niederwangen (CH)
(72) Erfinder: Lüthi, Rudolf, CH-3172 Niederwangen (CH); Krebs, Roland, CH-3312 Fraubrunnen (CH); Egolf, Theo, CH-3178 Boesingen (CH)
(74) Vertreter: AMMANN PATENTANWAELTE AG BERN

(56) Entgegenhaltungen:
- DE-A- 3 329 900
- FR-A- 2 332 125
- US-A- 3 077 259

## Beschreibung

Die vorliegende Erfindung betrifft eine Presse mit einer Transferanordnung gemäss Oberbegriff des Anspruchs 1. Die Transportstangen führen pro Arbeitszyklus eine geschlossene rechteckige Bewegung aus, indem sie in einem ersten Takt eine Anzahl erfasster Werkstücke zur nächsten Station des Werkzeuges vorschieben, dann seitlich vom Werkzeug entfernt, in Längsrichtung zurückgeführt und zum Erfassen der Werkstücke wieder zum Werkzeug hin bewegt werden. Es treten hierbei erhebliche Massenkräfte auf, so dass die Arbeitskadenz der Presse durch die Festigkeit und Stabilität der Transferanordnung begrenzt ist. Verhältnismässig enge Grenzen sind deshalb gesetzt, weil jede Erhöhung der Festigkeit und mechanischen Stabilität der Transportstangen gegen Deformation zu einer Gewichtserhöhung führt, die ihrerseits eine Erhöhung der Massenkräfte bewirkt.

Die DE-A-33 29 900 zeigt eine Anordnung der oben beschriebenen Art, bei welcher die Transportstangen an beiden Enden in Längs-, Quer- und Vertikalrichtung geführt sind, an beiden Enden in Querrichtung angetrieben und am einen Ende gemeinsam in Längsrichtung angetrieben werden. Die Transportstangen sind aus trennbaren Abschnitten aufgebaut. Diese Anordnung ist aufwendig und schwer und es wird nicht eine besondere Stabilität angestrebt. Die Tatsache, dass auch Vertikalantriebe und -Führungen mitbewegt werden, ergibt hohe Massenkräfte und erlaubt keine hohen Arbeitskadenzen.

Ziel vorliegender Erfindung ist es, eine Presse mit einer Transferanordnung anzugeben, die genügende Stabilität bei einfachem Aufbau und somit verhältnismässig geringem Gewicht sowie hohe Arbeitskadenzen erlaubt. Anspruch 1 nennt die Lösung der gestellten Aufgabe. Es zeigt sich, dass an ihren Enden spielfreieingespannte, d. h. unmittelbar starr mit einer Längs- oder Querführung verbundene Transportstangen besonders stabil sind gegen Verformung und somit vergleichsweise höheren Beschleunigungen ausgesetzt werden können. Da auch der Antrieb in Querrichtung spielfrei ist, wird jede schlagartige Beschleunigung und damit verbundene Vibration vermieden.

Da die Greifer zum Transport der Werkstücke im allgemeinen nicht symmetrisch an den Transportstangen angebracht sind, entstehen in diesen Stangen nicht nur Biege- und Scherbeanspruchungen, sondern auch Torsionsbeanspruchungen. Es werden daher vorzugsweise quadratische Hohlprofile für die Transportstangen verwendet, welche diese Beanspruchungen aufnehmen können, ohne übermässiges Gewicht aufzuweisen.

Die Erfindung wird nun anhand eines in der Zeichnung dargestellten Ausführungsbeispiels näher erläutert.
Figur 1 ist eine Draufsicht auf den Pressentisch und die Transferanordnung,
Figur 2 ist eine Stirnansicht der Presse mit Teilen der Transferanordnung,
Figur 3 ist ein Teilschnitt nach Linie III-III in Figur 1 in grösserem Massstab
und Figur 4 zeigt einen Teil des Antriebs der Transferanordnung.

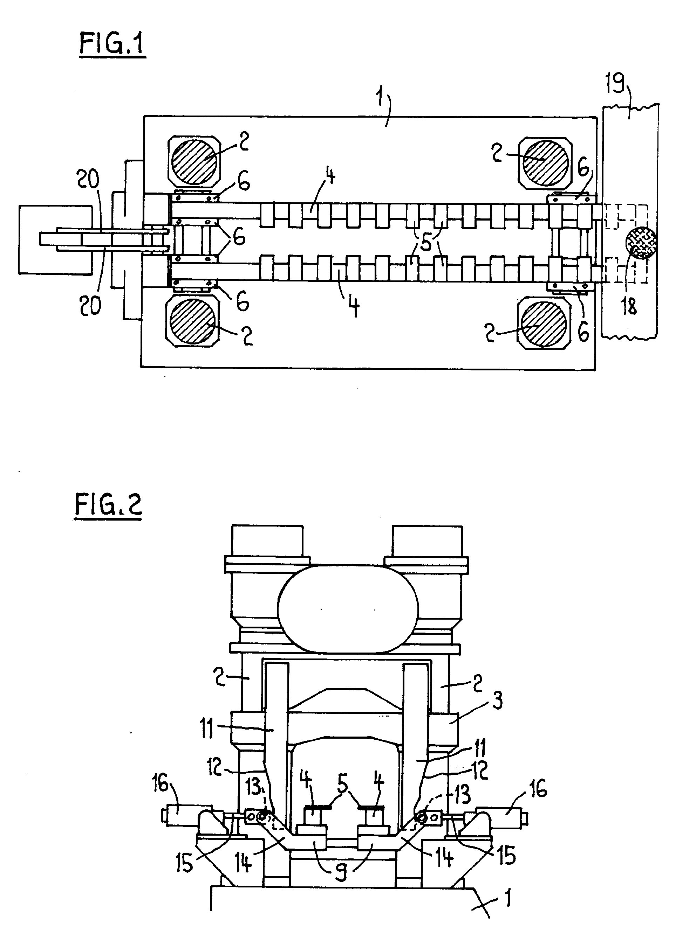

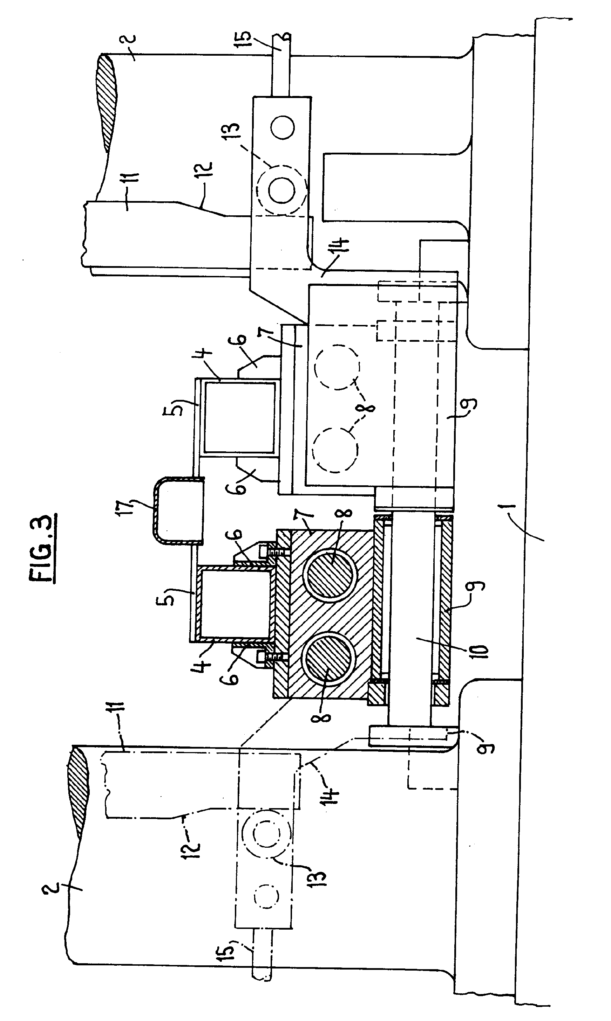

Die Figuren 1 und 2 zeigen mehr oder weniger schematisch einen Pressentisch 1, Führungssäulen 2 und einen Pressestössel 3. In üblicher Weise ist auf dem Tisch 1 der unterteil und am Stössel 3 der Oberteil eines Transferwerkzeuges mit mehreren Bearbeitungsstatoinen befestigt. Dieses Werkzeug ist in der Zeichnung zur Vereinfachung nicht dargestellt. Beidseitig des Werkzeuges befindet sich je eine Transportstange 4 mit rein schematisch dargestellten Greifern 5 für Werkstücke. Wie insbesondere Figur 3 zeigt, bestehen die Transportstangen 4 aus quadratischen Hohlprofilen, die bezogen auf ihr Gewicht eine hohe Steifheit auf Biegung und Torsion aufweisen. Die Greifer 5 sind oben auf die Transportstangen 4 aufgesetzt, d.h. asymmetrisch zum Profil dieser Stangen angeordnet, so dass, wie bereits erwähnt, im Betrieb auf die Transportstangen 4 auch Torsionsbeanspruchungen wirken. Zwischen den Führungssäulen 2 beziehungsweise in Längsrichtung der Transportstangen 4 etwas ausserhalb der Führungssäulen sind die Enden dieser Transportstangen mit Befestigungswinkeln 6 verschweisst, die ihrerseits mit Längsschlitten 7 fest verschraubt sind. Diese Längsschlitten 7 (Figur 3) sind starr längs zweier paralleler Führungstangen 8 geführt, die in einem Querschlitten 9 befestigt sind, der längs zweier paralleler Quer-Führungsstangen 10 geführt ist. Die Enden der Transportstangen 4 sind somit starr eingespannt und geführt, was zusammen mit der hohen Steifigkeit der Transportstangen selbst zu einer sehr hohen Stabilität d.h. geringen Verformungen der Transportstangen unter den oben erwähnten Massenkräften führt. Es ist daher möglich, mit verhältnismässig sehr hohen Arbeitskadenzen von beispielsweise bis zu 300/min. zu arbeiten, ohne dass die Betriebssicherheit oder die Standzeit der Führungen und des Antriebs leiden.

Die Querbewegung der Transportstangen 4 wird gesteuert durch Steuerschienen 11, die am Pressestössel 3 montiert sind und mit ihren aussen liegenden Steuerkurven 12 auf Steuerrollen 13 von Fortsätzen 14 der Schlitten 9 wirken. Auf die Fortsätze 14 wirken auch die Kolbenstangen 15 von pneumatischen Zylindern 16. Es wirkt damit ein zuverlässiger konstanter Druck nach innen auf die Fortsätze 14, so dass die Steuerrollen 13 stets sicher an den Steuerkurven 12 der Steuerschienen 11 anliegen. Aus den Figuren 2 und 3 ist ersichtlich, dass bei der Abwärtsbewegung der Steuerschienen 11 mit dem Pressestössel 3 die Steuerrollen 13 und die damit verbundenen Teile, d.h. auch die Transportstangen 4, auswärtsgespreizt werden, so dass ein zwischen zwei gegenüberliegenden Haltern 5 geklemmtes Werkstück 17 freigegeben wird. Die Halter 5 werden dabei auch aus dem Bereich der beiden Werkzeugteile seitlich entfernt, so dass sich das Werkzeug zur Bearbeitung von Werkstücken in allen Stationen schliessen kann. In Figur 1 ist angedeutet, dass an einer bestimmten Stelle Rohlinge 18 aus einem querdurchlaufenden Band 19 ausgestanzt und von den äussersten Greifern der Transportschienen 4 übernommen wird.

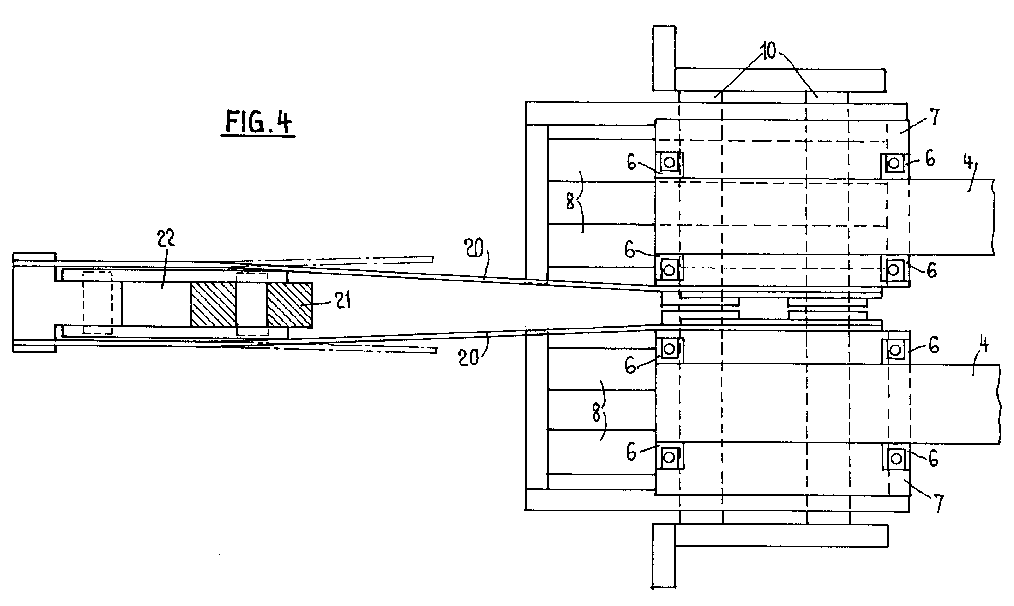

Der Längsantrieb der Transportstangen 4 erfolgt mittels zweier Blattfedern 20, die an der Innenseite der Längsschlitten 7 befestigt sind und die von einem Antriebshebel 21 über einen Kupplungshebel 22 angetrieben werden. Die Blattfedern 20 sind starr genug, um die Transportstangen 4 in Längsrichtung anzutreiben, sie können aber wie in Figur 4 angedeutet, den Querbewegungen der Transportstangen 4 folgen. Es sei noch darauf hingewiesen, dass das Ausführungsbeispiel des Längsantriebs gemäss Figur 4 etwas von dem rein schematisch in Figur 1 Dargestellten abweicht.

Wie bereits erwähnt, führen die beiden Transportstangen 4 im Betrieb sehr schnelle Bewegungen in Längs- und Querrichtung aus, wobei während der Querbewegungen in den Stangen erhebliche Massenkräfte auftreten, welche diese Stangen auf Biegung und Torsion beanspruchen. Dank der erfindungsgemässen spielfreien und somit starren Führung der Stangenenden sind diese Stangenenden quasi starr eingespannt, erfahren also an und für sich keine Biegung bzw. Verschwenkung in ihrer Halterung. Es zeigt sich, dass damit die Durchbiegung der Transportstangen ganz erheblich reduziert werden kann . Dementprechend sind erheblich höhere Beanspruchungen, bzw. höhere Arbeitskadenzen bei gegebenen Anforderungen an die Präzision der jeweiligen Lage der Greifer für die Werkstücke möglich. Die hohe Steifigkeit bei geringem Gewicht der Transportstangen 4 trägt das ihre dazu bei, dass die ganze Anordnung ausserordentlich steif ist und somit hohe Arbeitskadenzen zulässt. Trotzdem halten sich die Massenkräfte in Grenzen, weil das Gesamtgewicht der bewegten Teile verhältnismässig gering ist.

## Patentansprüche

1. Presse mit einer Transferanordnung zum schrittweisen Transport von Werkstücken (17) durch Bearbeitungsstationen eines Werkzeuges, mit seitlich des Werkzeuges angeordneten Transportstangen (4), die mit Greifern (5) für Werkstücke (17) besetzt und zyklisch in Längs- und Querrichtung hin- und herbewegbar sind, wobei die Transportstangen (4) an ihren Enden in Längs- und Querrichtung geführt sind, dadurch gekennzeichnet, dass für die Enden beider Transportstangen (4) spielfreie, starre Längs- (7, 8) und Querführungen (9, 10) mit je einem Führungsschlitten (7, 9) der auf je zwei Führungsstangen (8, 10) geführt ist, vorgesehen sind, wobei die Transportstangen (4) mit je einem der Führungsschlitten (7, 9) starr verbunden sind, und dass je einer der Führungsschlitten (9) durch eine mit einem Pressenstössel (3) bewegte Steuerkurve (11, 12) und eine formschlüssig gegen die Steuerkurve angelegte Steuerrolle (13) in Querrichtung angetrieben wird.

2. Presse nach Anspruch 1, dadurch gekennzeichnet, dass die Transportstangen (4) quadratische Hohlprofile sind.

3. Presse nach Anspruch 1 oder 2, dadurch gekennzeichnet, dass die Steuerrollen (13) durch den Druck von pneumatischen Zylindern (15, 16) gegen die Steuerkurven (11, 12) angelegt werden.

4. Presse nach einem der Ansprüche 1 bis 3, dadurch gekennzeichnet, dass die Transportstangen (4) von einem gemeinsamen Antrieb über Blattfedern (20) in Längsrichtung angetrieben werden.

## Claims

1. A press having a transfer device for the stepwise transport of workpieces (17) through processing stations of a tool, comprising transport bars (4) which are disposed laterally with respect to said tool and which are provided with grippers (5) for said workpieces (17) and are displaceable longitudinally and transversally in a reciprocating, cyclic movement, the ends of said transport bars (4) being guided in the longitudinal and transversal directions, characterised in that allowance-free, rigid longitudinal (87, 8) and transversal (9, 10) guidings are provided for the ends of both transport bars (4), said guidings comprising each a respective guiding slide (7, 9) which is guided on two respective guiding bars (8, 10), each of said transport bars (4) being rigidly connected to one of said guiding slides (7, 9), and in that one respective guiding slide (9) is transversally driven by a control rail (11, 12) which is moved together with a press slide (3) and by a control roller (13) which is positively engaged with said control rail.

2. Press according to claim 1, characterised in that said transport bars (4) are square hollow profiles.

3. Press according to claim 1 or 2, characterised in that said control rollers (13) are applied to said control rails (11, 12) by the pressure of pneumatic cylinders (15, 16).

4. Press according to any one of claims 1 to 3, characterised in that said transport bars (4) are longitudinally driven by a common drive by means of leaf springs (20).

## Revendications

1. Presse comprenant un dispositif de transfert pour le transport par pas de pièces (17) d'une station d'usinage d'un outil à l'autre, présentant des barres de transport (4) disposées sur le côté dudit outil qui comportent des preneurs (5) pour lesdites pièces (17) et sont déplaçables de manière cyclique et en mouvement alternatif dans le sens longitudinal et transversal, les barres de transport (4) étant guidées par leurs extrémités dans le sens longitudinal et transversal, caractérisée en ce que des guides longitudinaux (7, 8) et transversaux (9, 10) libres de jeu et rigides sont prévus pour les extrémités des deux barres de transport (4), ces guides comprenant chacun une coulisse de guidage (7, 9) guidée chaque fois sur deux barres de guidage (8, 10), les barres de transport (4) étant reliées chacune de manière rigide à l'une des coulisses de guidage (7, 9), et en ce que l'une (9) des coulisses de guidage est chaque fois commandée dans le sens transversal par une came de commande (11, 12) actionnée conjointement à un coulisseau de la presse, et par un rouleau de commande (13) appliqué contre ladite came à engagement positif.

2. Presse selon la revendication 1, caractérisée en ce que les barres de transport (4) sont des profilés carrés creux.

3. Presse selon la revendication 1 ou 2, caractérisée en ce que les rouleaux de commande (13) sont appliqués contre les cames de commande (11, 12) par la pression de cylindres pneumatiques (15, 16).

4. Presse selon l'une quelconque des revendications 1 à 3, caractérisée en ce que les barres de transport (4) sont actionnées par un entraînement commun par l'intermédiaire de ressorts à lames (20).
